# EUROPÄISCHE PATENTSCHRIFT

(11) **EP 1 597 316 B1**
(45) Veröffentlichungstag und Bekanntmachung des Hinweises auf die Patenterteilung: **07.06.2006**
(21) Anmeldenummer: 04710353.6
(22) Anmeldetag: 12.02.2004
(51) Int. Cl.: C08L 67/02, C08L 69/00

(54) **VERWENDUNG VON ZUSAMMENSETZUNGEN AUF BASIS SCHLAGZÄHMODIFIZIERTER POLYALKYLENTEREPHTALAT/POLYCARBONAT BLENDS ZUR HERSTELLUNG VON FORMKÖRPERN**
USE OF COMPOSITIONS BASED ON IMPACT-RESISTANT MODIFIED POLYALKYLENE TEREPHTALATE/POLYCARBONATE BLENDS FOR PRODUCING MOLDED BODIES
UTILISATION DE COMPOSITIONS A BASE DE MELANGES POLYALKYLENE TEREPHTALATE/POLYCARBONATE, MODIFICATEURS DE RESISTANCE AUX CHOCS, POUR PRODUIRE DES CORPS MOULES

(30) Priorität: 21.02.2003 DE 10307685; 05.03.2003 DE 10309452
(43) Veröffentlichungstag der Anmeldung: 23.11.2005
(73) Patentinhaber: Bayer MaterialScience AG, 51368 Leverkusen (DE)
(72) Erfinder: PERSIGEHL, Peter, 40878 Ratingen (DE); BRAIG, Thomas, 40476 Düsseldorf (DE); KARBACH, Alexander, 47800 Krefeld (DE); VOETZ, Matthias, 50735 Köln (DE); PAUL, Friedemann, 51469 Bergisch Gladbach (DE); DRECHSLER, Doris, 47829 Krefeld (DE); TILLACK, Jörg, 51427 Bergisch Gladbach (DE)
(86) Internationale Anmeldenummer: PCT/EP2004/001294
(87) Internationale Veröffentlichungsnummer: WO 2004/074377

(56) Entgegenhaltungen:
- EP-A- 0 639 601
- US-A- 4 271 064
- US-A- 4 515 918
- US-A1- 2001 055 671

## Beschreibung

Die vorliegende Erfindung betrifft die Verwendung von Zusammensetzungen auf Basis schlagzähmodifizierter Polyalkylenterephthalt/Polycarbonat-Blends zur Herstellung von lackierten Halbzeugen und Formteilen.

Schlagzähmodifzierte Formmassen, die teilkristalline Polyester, amorphe Polycarbonate und deren Verwendung als Substrate für Lacke auf Basis sind bekannt. Derartige Formmassen werden beispielsweise im Automobilsektor für Formteile wie Stoßfänger, Kotflügel, Kühlergitter, Blenden, Heckblenden, Schweller, Spoiler, Türgriffe, Tankdeckel, Verkleidungen, horizontale Bauteile wie Motorhauben oder Dachelemente, Türmodule oder ähnlichem eingesetzt. Voraussetzungen für den Einsatz in Kfz-Anwendungen sind unter anderem hohe Wänneformbeständigkeit, hohe Fließfähigkeit in der Schmelze, hohe Schlagzähigkeit auch bei tiefen Temperaturen und gute Lackhaftung.

Die Lackierung dieser Substrate kann dabei über ein einschichtiges, zweischichtiges oder mehrschichtiges Lacksystem erfolgen. Lackaufbauten können unter anderem folgende Schichten enthalten: Haftprimer, Leitprimer, Primer Surfacer, Basislacke, Klarlacke und/oder Decklacke.

Die Lackierung erfolgte über lange Zeit mit Lacksystemen, die auf organischen Lösemitteln basieren und im folgenden organische Lacksysteme genannt werden, so dass die Substrate auf Basis von schlagzähmodifizierten Polyalkylenterephthalat/Polycarbonat-Blends für maximale Haftung der organischen Lacksysteme optimiert wurden. Stand der Technik sind hier insbesondere Zusammensetzungen auf Basis von schlagzähmodifizierten Polybutylenterephthalat/Polycarbonat Blends, die neben der sehr guten Lackhaftung auch hohe Wärmeformbeständigkeit und Tieftemperaturschlagzähigkeit zeigen. Dies ist beispielsweise in DE-A 3 118 526 und WO-A 0234833 beschrieben.

Aus Umweltschutzgründen werden heute zunehmend Lacksysteme eingesetzt, die Wasser als Lösemittelbasis einsetzen und in dieser Schrift Hydrobasislacke oder Hydrolacke genannt werden. Es zeigte sich, dass für den Einsatz organischer Lacksysteme optimierte Substrate auf Basis von schlagzähmodifizierten Polycarbonat/Polyalkylenterephthalat-Blends mangelhafte Lackhaftung bei Verwendung von Hydrobasislacken ergaben. Beim Einsatz von mehrschichtigen Lacksystemen, bei denen für die einzelnen Lackschichten organische und wässrige Lösemittel eingesetzt werden, ist erfindungsgemäß das Lösemittel der untersten Lackschicht ausschlaggebend. Besonders mangelhafte Lackhaftungen wurden beobachtet, wenn ein Hydrolack oder Hydrobasislack ohne vorherige Applikation eines Primers oder Fillers direkt auf das Substrat appliziert wurde.

Aufgabe dieser Erfindung war daher, das Substrat auf Basis von schlagzähmodifizierten Polyalkylenterephthalat/Polycarbonat-Blends für die Lackhaftung von Hydrobasislacken zu optimieren, wobei die anderen Schlüsseleigenschaften dieser Materialklasse wie beispielsweise Wärmeformbeständigkeit, Tieftemperaturzähigkeit, Steifigkeit und Fließfähigkeit erhalten bleiben.

Überraschend wurde nun gefunden, dass bei Zusammensetzungen auf Basis von schlagzähmodifizierten Blends aus Polycarbonat und Polyalkylenterephthalaten die Lackhaftung von Hydrobasislacken unter Beibehaltung der anderen genannten Schlüsseleigenschaften erhöht werden kann, wenn die Polyalkylenterephthalat-Komponenten eine Mischung aus mindestens zwei verschiedenen Polyalkylenterephthalaten mit unterschiedlichen Alkylenkettenlängen, bevorzugt aus mindestens Polybutylenterephthalat und Polyethylenterephthalat enthält. Die erfindungsgemäßen Formmassen zeichnen sich darüber hinaus durch hohe Wärmeformbeständigkeit, hohe Fließfähigkeit in der Schmelze, hohe Steifigkeit, hohe Dimensionsstabilität und hohe Tieftemperaturzähigkeit aus.

Gegenstand der Erfindung ist die Verwendung von Zusammensetzungen, enthaltend
A) 4 bis 80, vorzugsweise 10 bis 60, besonders bevorzugt 12 bis 40, insbesondere 15 bis 30 Gew.-Teile, mindestens eines Polyalkylenterephthalats, bevorzugt mindestens eines Polyhutylenterephthalats,
B) 4 bis 80, vorzugsweise 6 bis 60, besonders bevorzugt 8 bis 40, insbesondere 10 bis 30 Gew.-Teile, mindestens eines Polyalkylenterephthalats mit einer von Komponente A) unterschiedlichen Alkylenkettenlänge, bevorzugt mindestens eines Polyethylenterephthalats,
C) 10 bis 90, vorzugsweise 20 bis 80, besonders bevorzugt 25 bis 60, insbesondere 35 bis 55 Gew.-Teile, mindestens eines aromatischen Polycarbonats,
D) 1 bis 30, vorzugsweise 3 bis 25, besonders bevorzugt 6 bis 20, insbesondere 8 bis 16 Gew.-Teile, mindestens eines kautschukelastischen Polymerisats oder Pfropfcopolymerisats,
E) 0,1 bis 20 Gew.-Teile, bevorzugt 0,15 bis 15 Gew.-Teile, besonders bevorzugt 0,2 bis 10 Gew.-Teile üblicher Additive und Verarbeitungshilfsmittel, die zusammen 100 Gew.-Teile ergeben, gegebenenfalls zusätzlich enthaltend
F) 0 bis 60, vorzugsweise 2 bis 45, besonders bevorzugt 4 bis 30 Gew.-Teile, mindestens eines teilchenförmigen mineralischen Füllstoffs,
zur Herstellung von lackierten Formteilen, wobei aus A) - F) Formkörper hergestellt werden und diese mit Hydrolacken lackiert werden, wobei bei mehrschichtigen Lacksystemen mit verschiedenen Lösemitteln mindestens das Lösemittel der ersten, untersten Lackschicht auf Wasserbasis bestehen muss.

Als **Komponente A)** enthalten die Zusammensetzungen erfindungsgemäß ein oder eine Mischung aus zwei oder mehr unterschiedlichen Polyalkylenterephthalaten. Polyalhylenterephthalate im Sinne der Erfindung sind Polyalkylenterephthalate, die sich von Terephthalsäure (oder ihren reaktionsfähigen Derivaten) und Alkandiolen beispielsweise auf Basis von Propylenglycol oder Butandiol ableiten. Erfindungsgemäß werden als Komponente A) bevorzugt Polybutylenterephthalat und/oder Polytrimethylenterephthalat, am meisten bevorzugt Polybutylenterephthalat eingesetzt.

Polyalkylenterephthalate im Sinne der Erfindung sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Ethylen- bzw. Propandiol-1,3- bzw: Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-D1-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Propandiol-1,3 und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im Allgemeinen eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

Bevorzugt können die erfindungsgemäß hergestellten Polyester auch im Gemisch mit anderen Polyestern und/oder weiteren Polymeren eingesetzt werden. Besonders bevorzugt werden Gemische von Polyalkylenterephthalaten mit anderen Polyestern eingesetzt.

Den Polyestern können übliche Additive wie z.B. Entformungsmittel, Stabilisatoren und/oder Fließmittel in der Schmelze zugemischt oder auf der Oberfläche aufgebracht werden.

Als **Komponente B)** enthalten die Zusammensetzungen erfindungsgemäß mindestens ein Polyalkylenterephthalat entsprechend Komponente A, das sich von Komponente A) in der Länge Alkylenkette des eingesetzten Alkandiols unterscheidet.

Bevorzugt wird als Komponente B) mindestens ein Polyethylenterephthalat eingesetzt, ganz bevorzugt, wenn als Komponente A mindestens ein Polybutylenterephthalat eingesetzt wird.

Polyethylenterephthalate im Sinne der Erfindung sind Polyalkylenterephthalate, die sich von Terephthalsäure (oder ihren reaktionsfähigen Derivaten) und Alkandiolen auf Basis von Ethylenglykol ableiten.

Bevorzugte Polyethylenterephthalate (im folgenden auch abgekürzt: PET) lassen sich aus Terephthalsäure (oder ihren reaktionsfähigen Derivaten) und aliphatischen oder cycloaliphatischen Diolen mit Ethylenglycoleinheit nach bekannten Methoden herstellen (Kunststoff-Handbuch, Bd. VIII, S. 695-703, Karl-Hanser-Verlag, München 1973).

Bevorzugte Polyethylenterephthalate enthalten mindestens 80, vorzugsweise 90 mol-%, bezogen auf die Dicarbonsäure, Terephthalsäurereste und mindestens 80, vorzugsweise mindestens 90 mol-%, bezogen auf die Diolkomponente, Ethylenglykolreste.

Die bevorzugten Polyethylenterephthalate können neben Terephthalsäureresten bis zu 20 mol-% Reste anderer aromatischer Dicarbonsäuren mit 8 bis 14 C-Atomen oder aliphatischer Dicarbonsäuren mit 4 bis 12 C-Atomen enthalten, vorzugsweise Phthalsäure, Isophthalsäure, Naphthalin-2,6-dicarbonsäure, 4,4'-Diphenyldicarbonsäure, Bemstein-, Adipin-, Sebacinsäure, Azelainsäure, Cyclohexandiessigsäure.

Die bevorzugten Polyethylenterephthalate können neben Ethylenglykol bis zu 20 mol-% anderer aliphatischer Diole mit 3 bis 12 C-Atomen oder cycloaliphatischer Diole mit 6 bis 21 C-Atomen enthalten, z.B. Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932). Polyethylenterephthalate können weiterhin auch bis zu 20 mol-% Ether- bzw. Polyetherstrukturen enthalten.

Die Polyethylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele bevorzugter Verzweigungsmittel sind Trimesinsäure, Trimellitsäure, Trimethylolethan und -propan und Pentaerythrit. Es ist ratsam, nicht mehr als 1 mol-% des Verzweigungsmittels, bezogen auf die Säurekomponente, zu verwenden.

Bevorzugte Polyethylenterephthalate sind auch Copolyester, die aus mindestens zwei Säurekomponenten und/oder aus mindestens zwei Alkoholkomponenten hergestellt sind, besonders bevorzugte Copolyester sind Poly-(ethylenglykol/butandiol-1,4)-terephthalate.

Besonders bevorzugt sind Polyethylenterephthalate, die allein aus Terephthalsäure und deren reaktionsfähigen Derivaten (z.B. deren Dialkylestem) und Ethylenglykol hergestellt worden sind.

Die Polyethylenterephthalate besitzen im Allgemeinen eine Intrinsic-Viskosität von ca. 0,3 bis 1,5 dl/g, bevorzugt 0,4 bis 1,3 dl/g, insbesondere bevorzugt 0,5 bis 0,8 dl/g, jeweils gemessen in Phenol/o-Dichlorbenzol (1:1 Gew.-Teile) bei 25°C.

Besonders bevorzugt sind schnell kristallisierende Polyethylenterephthalate, dass heißt Polyethylenterephthalate, die nach der DSC-Methode für isotherme Kristallisation bei 215°C Kristallisationszeiten im Allgemeinen kleiner 15 Minuten, bevorzugt von kleiner 10 Minuten und besonders bevorzugt von kleiner 5 Minuten aufweisen.

Eine schnelle Kristallisation der erfindungsgemäßen Polyethylenterephthalate wird bevorzugt durch Zusatz von Kristallisationsmitteln zum Polyethylenterephthalat bei dessen Herstellung oder im Anschluss z.B. durch Einmischen in die Polyethylenterephthalat-Schmelze erreicht. Als Kristallisationsmittel werden bevorzugt Metallsalze organischer Carbonsäuren verwendet, wie z.B. Alkali- oder Erdalkalimetallsalze der Benzoesäure oder substituierten Benzoesäure.

Als **Komponente C)** enthalten die erfindungsgemäßen Zusammensetzungen erfindungsgemäß ein Polycarbonat oder eine Mischung von Polycarbonaten.

Bevorzugte Polycarbonate sind solche Homopolycarbonate und Copolycarbonate auf Basis der Bisphenole der allgemeinen Formel (I),

HO-Z-OH (I)

worin Z ein divalenter organischen Rest mit 6 bis 30 C-Atomen ist, der eine oder mehrere aromatische Gruppen enthält.

Bevorzugt sind Bisphenole der Formel (Ia) 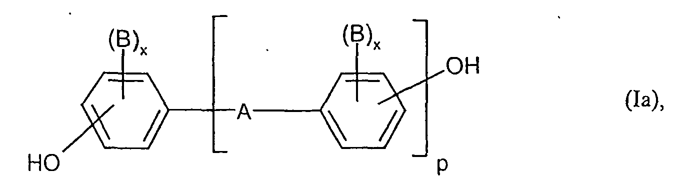 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (II) oder (III) 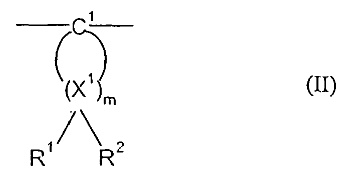 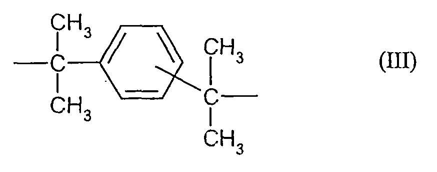
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R¹ und R² für jedes X¹: individuell wählbar, unabhängig voneinander Wasserstoff oder C₁-C₆₋Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einen Atom X¹, R¹ und R² gleichzeitig Alkyl sind.

Beispiele für Bisphenole gemäß der allgemeinen Formel (I) sind Bisphenole, die zu den folgenden Gruppen gehören: Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bispheriole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen: Hydrochinon, Resorcin, 4,4'-Dihydroxydiphenyl, Bis-(4 hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenyl-ethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, in US-A 2 991 273, in US-A 3 271 367, in US-A 4 982 014, in US-A 2 999 846, in DE-A 1570 703, in DE-A 2 063 050, in DE-A 2 036 052, in DE-A 2 211 956, in DE-A 3 832 396, und in FR-A 1561 518 sowie in den Japanischen Offenlegungsschriften mit den Anmeldenummern JP-A 620391986, JP-A 62040 1986 und JP-A 105550 1986.

1,1-Bis-(4-hydroxyphenyl)-3,3,5-trimethylcyclohexan und seine Herstellung ist z.B. beschrieben in-US-A 4 982 014.

Indanbisphenole und ihre Herstellung sind zum Beispiel beschrieben in US-A 3 288 864, in JP-A 60 03S 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestem nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Preyorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beispielsweise beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß geeigneten Polycarbonate haben bevorzugt ein Gewichtsmittel der molaren Masse (M̅_{w̅}), welches sich z.B. durch Ultrazentrifugation oder Streulichtmessung bestimmen lässt, von 10 000 bis 200 000 g/mol. Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5'-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 Mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α',α"-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Fälle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach dem Schmelzeumesterungsverfahren sind die literaturbekannten Ammoniumsalze und Phosphoniumsalze (siehe beispielsweise US-A 3 442 564, JP-A-14742/72, US-A 5 399 659 und DE-A 19 539 290).

Copolycarbonate können auch verwendet werden. Copolycarbonate im Sinne der Erfindung sind insbesondere Polydiorganosiloxan-Polycarbonat-Blockcopolymere, deren Gewichtsmittel der molaren Masse (M̅_{w̅}) bevorzugt 10 000 bis 200 000 g/mol, besonders bevorzugt 20 000 bis 80 000 g/mol beträgt (ermittelt durch Gelchromatographie nach vorheriger Eichung durch Lichtstreuungsmessung oder Ultrazentrifugation). Der Gehalt an aromatischen Carbonatstruktureinheiten in den Polydiorganosiloxan-Polycarbonat-Blockcopolymeren beträgt vorzugsweise 75 bis 97,5 Gew.-%, besonders bevorzugt 85 bis 97 Gew.-%. Der Gehalt an Polydiorganosiloxanstruktureinheiten in den Polydiorganosiloxan-Polycarbonat-Blockcopolymeren beträgt vorzugsweise 25 bis 2,5 Gew.-%, besonders bevorzugt 15 bis 3 Gew.-%. Die Polydiorganosiloxan-Polycarbonat-Blockcopolymeren können zum Beispiel ausgehend von α,ω-Bishydroxyaryloxyendgruppen-haltigen Polydiorganosiloxanen mit einem mittleren Polymerisationsgrad von bevorzugt Pₙ = 5 bis 100, besonders bevorzugt Pₙ = 20 bis 80, hergestellt werden.

Den Polycarbonaten könne übliche Additive wie z.B. Entformungsmittel in der Schmelze zugemischt oder auf der Oberfläche aufgebracht werden. Bevorzugt enthalten die verwendeten Polycarbonate bereits Entformungsmittel vor Compoundierung mit den anderen Komponenten der erfindungsgemäßen Formmassen.

Als **Komponente D)** enthalten die Zusammensetzungen erfindungsgemäß ein oder eine Mischung aus zwei oder mehr unterschiedlichen kautschukelastischen Polymerisaten mit einer Glasübergangstemperatur unter -5°C, bevorzugt unter -15°C, bevorzugter unter -30°C, am meisten bevorzugt unter -50°C, die oft auch als Schlagzähmodifikatoren, Elastomere oder Kautschuke bezeichnet werden.

Bei der erfindungsgemäßen Komponente D) handelt es sich allgemein um Copolymerisate, bevorzugt um Propfcopolymerisate aus mindestens zwei, bevorzugt drei der folgenden Monomere: Styrol, Acrylnitril, Butadien, Acryl- bzw. Methacrylsäureester von Alkohlen mit 1 bis 18 C-Atomen als Alkoholkomponente, Vinylacetat, Ethylen, Propylen, 1,3-Butadien, Isobuten, Isopren und/oder Chloropren. Derartige Polymerisate der Komponente D) werden z.B. in Methoden der Organischen Chemie" (Houben-Weyl), Bd. 14/1, Georg Thieme-Verlag, Stuttgart 1961, S. 392-406 und in C.B. Bucknall, "Thoughened Plastics", Appl. Science Publishers, London 1977, beschrieben. Bei den Pfropfcopolymerisaten wird auf einen Kern mindestens eine äußere Schale aufgepfropft.

Bevorzugt als Komponente D) eingesetzte Propfcopolymerisate werden beispielsweise durch Propfreaktion von Styrol, Acrylnitril und/oder Methylmethacrylat auf eine Pfropfgrundlage von 1,3-Butadien, Isopren, n-Butylacrylat, Styrol und/oder 2-Ethylhexylacrylat, bevorzugter durch Pfropfreaktion von Acrylnitril, Styrol und/oder Methylmethacrylat auf eine Pfropfgrundlage von 1,3-Butadien, Isopren, n-Butylacrylat, Styrol und/oder 2-Ethylhexylacrylat erhalten.

Erfindungsgemäß besonders bevorzugt sind Pfropfcopolymere, bei denen Methylmethacrylat oder eine Mischung von Methylmethacrylat und Styrol auf eine Pfropfgrundlage auf 1,3-Butadienbasis oder auf eine Pfropfgrundlage aus einer Mischung aus 1,3-Butadien und Styrol aufgepfropft werden, die auch als MBS-(Methylmethacrylat-Butadien-Styrol)-Kautschuke bezeichnet werden. Erfindungsgemäß besonders bevorzugt sind ebenfalls Pfropfcopolymere, bei denen Acrylnitril oder eine Mischung von Acrylnitril und Styrol auf eine Pfropfgrundlage auf 1,3-Butadienbasis oder auf eine Pfropfgrundlage aus einer Mischung aus 1,3-Butadien und Styrol aufgepfropft werden, die auch als ABS-(Acrylnitril-Butadien-Styrol)-Kautschuke bezeichnet werden.

Bevorzugt werden als Komponente D) auch Pfropfcopolymere eingestetzt, bei denen n-Butylacrylat, n-Butylmetacrylat, Ethylacrylat, Methylacrylat, 1,3-Butadien, Isopren und/oder 2-Ethylhexylacrylat auf eine Pfropfgrundlage aus von 1,3-Butadien, Isopren, n-Butylacrylat, Styrol und/oder 2-Ethylhexylacrylat aufgepfropft werden.

Ausdrücklich können die Monomermischungen, die auf die Pfropfgrundlage aufgepfropft werden, auch mit zusätzlichen reaktiven Gruppen, wie beispielsweise Epoxy- bzw. Glycidyl-, Carboxyl-, Carbonsäureanhydrid-, Amino- und/oder Amid-Gruppen, funktionalisierte Monomere mit eine ethylenischen Doppelbindung umfassen, wie beispielsweise Acylamid, Methacrylamid, (N,N-Dimehtylamino)ethylacrylat, bevorzugt Maleinsäure, Fumarsäure, Maleinsäureanhydrid, Allylglycidylether, Vinylglycidylether, Glycidylacrylat, Glycidylmetacrylat.

Erfindungsgemäß können auch vemetztende Monomere in die Propfgrundlage und/oder in äußere Schalen einpolymerisiert werden, wie beispielsweise Divinylbenzol, Diallylphthalat, Dihydrodicyclopentadienacrylat und/oder 1,3-Butadien.

Ferner können auch sogenannte pfropfvernetzende Monomere eingesetzt werden, die mindestens zwei polymerisierbare Doppelbindungen besitzen, wobei die Doppelbindungen bei der Polymerisation mit verschiedenen Geschwindigkeiten polymerisieren. Vorzugsweise polymerisiert eine Doppelbindung mit etwa der Geschwindigkeit wie die übrigen Monomere, die andere bzw: anderen Doppelbindung dagegen deutlich langsamer, so dass daraus ein gewisser Anteil an Doppelbindungen im Kautschuk resultiert. Beim Aufpfropfen einer weiteren Phase können Teile dieser Doppelbindungen mit den Pfropfmonomeren reagieren und die aufgepfropfte Phase somit partiell chemisch an die Pfropfgrundlage binden. Beispielsweise seien hier ethylenisch ungesättigte Carbonsäureester wie Allylacrylat, Allylmethacrylat, Diallymaleat, Diallylfumarat oder in US-A 4 148 846 genannte Verbindungen genannt.

Die Komponente D) umfasst bevorzugt ein oder mehrere Pfropfpolymerisate von
D.1) 5 bis 95, vorzugsweise 30 bis 90 Gew.-%, wenigstens eines Vinylmonomeren auf
D.2) 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage D.2) hat im Allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere D.1) sind vorzugsweise Gemische aus
D.1.1) 50 bis 99 Gew.-% Vinylaromaten und/oder kemsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
D.1.2) 1 bis 50 Gew.% Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere D.1.1) sind ausgewählt aus mindestens einem der Monomere Styrol, α-Methylstyrol und Methylmethacrylat, bevorzugte Monomere D.1.2) sind ausgewählt aus mindestens einem der Monomere Acrylnitril, Maleinsäureanhydrid und Methylmethacrylat.

Besonders bevorzugte Monomere sind D.1.1) Styrol und D.1.2) Acrylnitril.

Für die Pfropfpolymerisate D) geeignete Pfropfgrundlagen D.2) sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen D.2) sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß D.1.1) und D.1.2)), mit der Maßgabe, dass die Glasübergangstemperatur der Komponente D.2) unterhalb < 10°C, vorzugsweise <0°C, besonders bevorzugt <-10°C liegt.

Besonders bevorzugt ist reiner Polybutadienkautschuk.

Besonders bevorzugte Polymerisate D) sind z.B. ABS-Folymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage D.2) beträgt mindestens 30 Gew.-%, vorzugsweise mindestens 40 Gew.-% (in Toluol gemessen).

Die Pfropfcopolymerisate D) werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß D.2) der Polymerisate D) sind vorzugsweise Polymerisate aus Acrylsäurealkylestern, gegebenenfalls mit bis zu 40 Gew.-%, bezogen auf D.2) anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylesfer; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vemetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage D.2).

Bei cyclischen vernetzenden Monomeren mit mindestens 3 ethylenisch ungesättigten Gruppen ist es vorteilhaft, die Menge auf unter 1 Gew.-% der Pfropfgrundlage D.2) zu beschränken.

Bevorzugte "andere" polymerisierbare, ethylenisch ungesättigte Monomere, die neben den Acrylsäureestern gegebenenfalls zur Herstellung der Pfropfgrundlage D.2) dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage F.2) sind Emulsionspolymerisate, die einen Gelgehalt von mindestens 60 Gew.-% aufweisen.

Weitere geeignete Pfropfgrundlagen gemäß D.2) sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlage D.2) wird bei 25°C in einem geeigneten Lösungsmittel bestimmt.

Darüber hinaus umfasst Komponente D) bevorzugt ein oder eine Mischung aus zwei oder mehr unterschiedlichen Pfropfpolymerisaten mit einer Pfropfgrundlage auf Basis von Acrylaten mit einer Glasübergangstemperatur von unter -5°C (solche Pfropfpolymerisate werden im Allgemeinen als Acrylatkautschuke bezeichnet und sind dem Fachmann bekannt) oder ein oder eine Mischung aus zwei oder mehr unterschiedlichen elastischen Blockpolymeren, insbesondere Zwei- oder Dreiblockcopolymere auf Basis von Vinylaromaten und Dienen, oder Mischungen aus Pfropfpolymerisaten und elastischen Blockpolymeren, die als D') näher beschrieben werden und von der allgemeinen Bezeichnung Komponente D) mit umfasst werden.

Die eben genannten ebenfalls bevorzugt als einsetzbaren Acrylatkautschuke D') umfassen bevorzugt Pfropfcopolymerisate mit kautschukelastischen Eigenschaften, die im wesentlichen aus mindestens 2 der folgenden Monomeren erhältlich sind: (Meth)-Acrylsäureester mit 1 bis 18 C-Atomen in der Alkoholkomponente, Chloropren, Butadien-1,3, Isopropen, Styrol, Acrylnitril, Ethylen, Propylen und Vinylacetat, wobei die Pfropfbasis mindestens einen (Meth)Acrylsäureester enthält, also Polymerisate, wie sie z,B. ebenfalls in Methoden der Organischen Chemie" (Houben-Weyl), Bd. 14/1, Georg Thieme-Verlag, Stuttgart 1961, S. 393-406 und in C.B. Bucknall, "Thoughened Plastics", Appl. Science Publishers, London 1977, beschrieben sind.

Bevorzugte Polymerisate D') sind partiell vernetzt und besitzen Gelgehalte von über 5 Gew.-%, bevorzugt 20 Gew.-%, vorzugsweise über 40 Gew.-%, insbesondere über 60 Gew.-%.

Bevorzugte Acrylatkautschuke D') als Komponente D) sind Pfropfcopolymerisate enthaltend
D'.1) 95 bis 5, vorzugsweise 10 bis 80 Gew.-%, bezogen auf Komponente D), Pfropfauflage basierend auf mindestens einem polymerisierbaren, ethylenisch ungesättigten Monomeren als Pfropfmonomere und
D'.2) 5 bis 95, vorzugsweise 20 bis 90 Gew.-%, bezogen auf Komponente D), Acrylatkautschuk mit einer Glasübergangstemperatur <-10°C, vorzugsweise <-20°C als Pfropfgrundlage. Besonders bevorzugt können D'.2) Polymerisate aus Acrylsäureestern oder Meth-acrylsäureestern enthalten, die bis zu 40 Gew.-%, bezogen auf D'.2) andere ethylenisch ungesättigte Monomere enthalten können.

Die Acrylatkautschuke gemäß D'.2) sind vorzugsweise Polymerisate aus Acrylsäurealkylestern oder Meth-Acrylsäurealkylestern, gegebenenfalls mit bis zu 40 Gew.-%, bezogen auf D'.2), anderen polymerisierbaren, ethylenisch ungesättigten Monomeren. Zu den bevorzugten Acrylsäureestern oder Meth-Acrylsäureestern gehören C₁-C₈-Alkylester, insbesondere Methyl-, Ethyl-, Butyl-, n-Octyl- und 2-Ethylhexyl-ester; sowie Halogenalkylester, vorzugsweise Halogen-C₁-C₈-alkylester, wie Chlor-ethylacrylat, sowie Mischungen dieser Monomeren.

Acrylsäurealkylester und Methacrylsäureester sind vorzugsweise Ester der Acrylsäure oder Methacrylsäure mit einwertigen Alkoholen mit 1 bis 18 C-Atomen. Besonders bevorzugt sind Methacrylsäuremethylester, -ethylester und -propylester, n-Butylacrylat, t-Butylacrylat und t-Butylmethacrylat.

Pfropfmonomere der Pfropfauflage D'.1) sind vorzugsweise ausgewählt aus mindestens einem Monomer, vorzugsweise 2 oder 3 Monomeren der Gruppe bestehend aus Styrol, α-Methylstyrol, halogen- oder methylkernsubstituierten Styrolen, (Meth)Acrylsäure-C₁-C₈-alkylester, Acrylnitril, Methacrylnitril, Maleinsäureanhydrid, C₁-C₄-Alkyl- bzw. phenyl-N-substituierten Maleinimiden oder Mischungen hieraus.

Besonders bevorzugte Pfropfcopolymerisate D') umfassen Pfropfpolymerisate aus:
D'.1) 5 bis 95, vorzugsweise 10 bis 80, insbesondere 30 bis 80 Gew.-Teile, einer Mischung aus;
   D'.1.1) 50 bis 99, vorzugsweise 65 bis 90 Gew.-% Methylmethacrylat, Styrol, α-Methylstyrol, halogen- oder methylkemsubstituierten Styrolen oder Mischungen dieser Verbindungen und
   D'.1.2) 1 bis 50, vorzugsweise 35 bis 10 Gew.-% Methylmethacrylat, Acrylnitril, Methacrylnitril, Maleinsäureanhydrid, C₁-C₄-alkyl- bzw. -phenyl-N-substituierten Maleinimiden oder Mischungen dieser Verbindungen auf
D'.2) 5 bis 95, vorzugsweise 20 bis 90, insbesondere 20 bis 70 Gew.-Teilen Polymerisat auf Alkylacrylat-Basis mit einer Glasübergangstemperatur unter -10°C, vorzugsweise kleiner -20°C,
wobei die Summe der Gewichtsteile aus D'.1) und D'.2) 100 ergibt.

Insbesonders sind Pfropfcopolymerisate D') bevorzugt, die erhältlich sind durch Pfropfreaktion von
α 10 bis 70, vorzugsweise 15 bis 50, insbesondere 20 bis 40 Gew,%, bezogen auf Pfropfpolymisat D'), mindestens eines (Meth)-Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth)-Acrylsäureester und 50 bis 90, vorzugsweise 65 bis 80 Gew.-%, bezogen auf Gemisch, Styrol, als Pfropfauflage D'.1) auf
β 30 bis 90, vorzugsweise 50 bis 85, insbesondere 60 bis 80 Gew.-%, bezogen auf Pfropfcopolymerisat D'), eine Pfropfgrundlage D'.2), die 70 bis 100 Gew.-% mindestens eines Alkylacrylates mit 1 bis 8 C-Atomen im Alkyrest, vorzugsweise n-Butylacrylat und/oder Methyl-n-Butylacrylat und/oder 2-Ethyl-hexylacrylat, insbesondere n-Butylacrylat als alleiniges Alkylacrylat, 0 bis 30, vorzugsweise 0 bis 15 Gew.-% eines weiteren copolymerisierbaren monoethylenisch ungesättigten Monomeren, wie Butadien, Isopren. Styrol, Acrylnitril, Methylmethacrylat oder Vinylmethylether oder deren Mischungen, bis 5 Gew.-% eines copolymerisierbaren, polyfunktionellen, vorzugsweise bi- und trifunktionellen, die Vernetzung bewirkenden Monomeren, wobei sich die Gewichtsangaben auf das Gesamtgewicht der Pfropfgrundlage beziehen.

Bevorzugte Pfropfpolymerisate D') auf Basis von Acrylatkautschuken sind z.B. mit (Meth)-Acrylsäurealkylestern und/oder Styrol und/oder Acrylnitril gepfropfte Grundlagen D'.2). Acrylatkautschuke auf n-Butylacrylatbasis sind als Pfropfbasis D'.2) besonders bevorzugt.

Besonders bevorzugte Pfropfpolymerisate D') auf Basis von Acrylatkautschuken sind insbesondere solche, die weniger als 5 Gew.-% Polystyroleinheiten, bevorzugt weniger als 1 Gew.-% Polystyroleinheiten bezogen auf das Gesamtgewicht des Pfropfes, insbesondere bevorzugt keine Polystyroleinheiten enthalten.

Die Komponente D) kann auch eine Mischung verschiedener Pfropfcopolymerisate sein.

Der Gelanteil der Pfropfgrundlage β des Pfropfcopolymerisats D') beträgt im Allgemeinen mindestens 20 Gew.-%, vorzugsweise 40 Gew.-% (in Toluol gemessen) und der Pfropfgrad G) im Allgemeinen 0,15 bis 0,55.

Der mittlere Teilchendurchmesser des Pfropfcopolymerisats D') beträgt bevorzugt 0,01 bis 2 µm, bevorzugter 0,05 bis 1,0, besonders bevorzugt 0,1 bis 0,08, insbesondere 0,1 bis 0,4 µm.

Der mittlere Teilchendurchmesser wird beispielsweise an elektronenmikroskopischen Aufnahmen (TEM) von Ultra-Dünnschnitten der erfindungsgemäßen Formmassen, mit OsO₄ und RuO₄ behandelt, durch Ausmessen einer repräsentativen Menge (ca. 50) von Partikeln bestimmt.

Die mittlere Teilchengröße d₅₀ bestimmt mittels Ultrazentrifugation (W. Scholtan, H. Lange, Kolloid, Z. und Z. Polymere 250 (1972), 782-796) ist der Durchmesser oberhalb und unterhalb dessen jeweils 50 Gew.-% der Teilchen liegen. Die mittlere Teilchengröße d₅₀ der Pfropfpolymerisate D) (bzw. D') beträgt bevorzugt 0,08 bis 0,6 µm, besonders bevorzugt 0,1 bis 0,4 µm.

Der Gelgehalt der Pfropfgrundlagen D.2) (bzw. D'.2) wird bei 25°C in Dimethylformamid bestimmt.

Der Pfropfgrad G) bezeichnet das Gewichtsverhältnis von aufgepfropften Pfropfmonomeren zur Pfropfgrundlage und ist dimensionslos.

Zur Vernetzung bevorzugt der Polymerisate D) auf Basis von Acrylatkautschuken können Monomere mit mehr als einer polymerisierbaren Doppelbindung copolymerisiert werden. Bevorzugte Beispiele für vemetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat. Bevorzugt vemetzende Monomere sind Allylmethacrylat, Ethylenglykoldimethylacrylat, Diallylphthalat und heterocyclische Verbindungen, die mindestens 3 ethylenisch ungesättigte Gruppen aufweisen. Besonders bevorzugte vernetzende Monomere sind die cyclischen Monomere Triallylcyanurat, Triallylisocyanurat, Trivinylcyanurat, Triacryloylhexahydro-s-triazin, Triallylbenzole, Acrylsäureester des Tricyclodecenylalkohols.

Die Menge der vernetzenden Monomere beträgt vorzugsweise 0,02 bis 5, insbesondere 0,05 bis 2 Gew.-%, bezogen auf die Pfropfgrundlage D.2).

Bei cyclischen vernetzenden Monomeren mit mindestens 3 ethylenisch ungesättigten Gruppen ist es vorteilhaft, die Menge auf unter 1 Gew.-% der Pfropfgrundlage D.2) zu beschränken.

Die Pfropfpolymerisate D) können nach bekannten Verfahren wie Masse-, Suspensions-, Emulsions- oder Masse-Suspensionsverfahren hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten D) auch solche Produkte verstanden, die durch Polymerisation der Pfropfinonomere in Gegenwart der Pfropfgrundlage gewonnen werden.

Die Pfropfpolymerisate D) werden bevorzugt in kompaktierter Form eingesetzt.

Die erfindungsgemäße Komponente D) umfasst weiterhin Blockpolymere mit kautschukelastischen Eigenschaften, insbesondere zum Beispiel Zwei- (A-B) und Dreiblockcopolymere (A-B-A). Blockcopolymere des Typs A-B und A-B-A können typisches Verhalten thermoplastischer Elastomere zeigen. Die bevorzugten Blockcopolymere des Typs A-B und A-B-A enthalten ein oder zwei vinylaromatische Blöcke (besonders bevorzugt basierend auf Styrol) und einen Kautschuk-Block (besonders bevorzugt ein Dien-Kautschuk-Block, am meisten bevorzugt ein Polybutadien-Block oder Isopren-Block), die insbesondere gegebenenfalls auch teilweise oder vollständig hydriert sein können.

Geeignete Blockcopolymere des Typs A-B und A-B-A sind z.B. beschrieben in US-A 3 0.78 254, 3 402 159, 3 297 793, 3 265 765 und 3 594 452 und in GB-A 1 264 741. Beispiele typischer Blockcoplymere des Typs A-B und A-B-A sind: Polystyrol-Polybutadien (SBR), Polystyrol-Poly(ethylen-propylen), Polystyrol-Polyisopren, Poly(ε-Methylstyrol)-Polybutadien, Polystyrol-Polybutadien-Polystyrol (SBR), Polystyrol-Poly(ethylen-propylen)-Polystyrol, Polystyrol-Polyisopren-Polystyrol und Poly(ε-Methylstyrol)-Polybutadien-Poly(ε-Methylstyrol), sowie hydrierte Versionen davon wie zum Beispiel und bevorzugt hydriertes Polystyrol-Polybutadien-Polystyrol (SEBS) und hydriertes Polystyrol-Polyisopren (SEP). Die Verwendung entsprechender hydrierter Blockcopolymerisate gegebenenfalls im Gemisch mit der nicht hydrierten Vorstufe als Schlagzähmodifier ist beispielweise beschrieben in DE-A 2 750 515, DE-A 2 434 848, DE-A 038 551, EP-A 0 080 666 und WO-A 83/01254. Auf die Offenbarung der genannten Druckschriften wird hiermit ausdrücklich Bezug genommen.

Mischungen der erwähnten Blockpolymere können ebenfalls eingesetzt werden.

Besonders bevorzugt sind teilweise oder vollständig hydrierte Blockcopolymere, insbesondere bevorzugt sind hydriertes Polystyrol-Polybutadien-Polystyrol (SEBS) und hydriertes Polystyrol-Polyisopren (SEP).

Solche Blockpolymere des Typs A-B und A-B-A sind kommerziell aus einer Reihe von Quellen erhältlich, wie z.B. von Phillips Petroleum unter dem Handelsnamen SOLPRENE, von Shell Chemical Co. unter dem Handelsnamen KRATON, von Dexco unter dem Handelsnamen VECTOR und von Kuraray unter dem Handelsnamen SEPTON.

Die Komponente D) umfasst weiterhin auch ein oder mehrere kautschukmodifizierte Pfropfpolymerisate. Das kautschukmodifizierte Pfropfpolymerisat D') umfasst ein statistisches (Co)polymerisat aus Vinylmonomeren D'.1), vorzugsweise gemäß D'.1.1) und D'.1.2), sowie einen mit Vinylmonomeren, vorzugsweise gemäß D'.1.1) und D'.1.2) gepfropften Kautschuk D'.2). Die Herstellung von D) erfolgt in bekannter Weise durch radikalische Polymerisation, z.B. nach einem Emulsions-, Masse- oder Lösungs- oder Masse-Suspensions-Polymerisationsverfahren, wie z.B. in den US-A 3 243 481 beschrieben.

Bevorzugt sind ein oder mehrere Pfropfpolymerisate von 5 bis 95, vorzugsweise 20 bis 90 Gew.-% wenigstens eines Vinylmonomeren D'.1) auf 95 bis 5, vorzugsweise 80 bis 10 Gew.-% einer oder mehrerer Pfropfgrundlagen D'.2) mit Glasübergangstemperaturen < 10°C, vorzugsweise <-10°C.

Bevorzugte Monomere D'.1.1) sind Styrol, α-Methylstyrol, halogen- oder alkylkernsubstituierte Styrole wie p-Methylstyrol, p-Chlorstyrol, (Meth)acrylsäure-C₁-C₈-alkylester wie Methylmethacrylat, n-Butylacrylat und tert.-Butylacrylat. Bevorzugte Monomere B.1.2) sind ungesättigte Nitrile wie Acrylnitril, Methacrylnitril, (Meth)Acrylsäure-C₁-C₈-alkylester wie Methylmethacrylat, n-Butylacrylat, tert.-Butylacrylat, Derivate (wie Anhydride und Imide) ungesättigter Carbonsäuren wie Maleinsäureanhydrid und N-Phenyl-maleinimid oder Mischungen davon.

Besonders bevorzugte Monomere D'.1.1) sind Styrol, α-Methylstyrol und/oder Methylmethacrylat, besonders bevorzugte Monomere D.1.2) sind Acrylnitril, Maleinsäureanhydrid und/oder Methylmethacrylat.

Besonders bevorzugte Monomere sind D'.1.1) Styrol und D'.1.2) Acrylnitril.

Für die kautschukmodifizierten Pfropfpolymerisate D') geeignete Kautschuke D'.2) sind beispielsweise Dienkautschuke, Acrylat-, Polyurethan-, Silikon-, Chloropren- und Ethylen/Vinylacetat-Kautschuke. Ebenso sind Komposite aus verschiedenen der genannten Kautschuke als Pfropfgrundlagen geeignet.

Bevorzugte Kautschuke D'.2) sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Vinylmonomeren (z.B. gemäß D'.1.1) und D'.1.2)), mit der Maßgabe, dass die Glasübergangstemperatur der Komponente D'.2) unterhalb 10°C, vorzugsweise unterhalb -10°C liegt. Besonders bevorzugt wird reiner Polybutadienkautschuk.

Weitere copolymerisierbare Monomere können bis zu 50 Gew.%, vorzugsweise bis zu 30, insbesondere bis zu 20 Gew.% (bezogen auf die Kautschukgrundlage D'.2) in der Kautschukgrundlage enthalten sein.

Geeignete Acrylatkautschuke gemäß D'.2) der Polymerisate D') sind vorzugsweise Polymerisate aus Acrylsäurealkylestern, gegebenenfalls mit bis zu 40 Gew.-%, bezogen auf D'.2) anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; halgoenalkylester, vorzugsweise Halogen-C₁-C₈-alkylester, wie Chlor-ethylacrylat sowie Mischungen dieser Monomeren.

Bevorzugte "andere" polymerisierbare, ethylenisch ungesättigte Monomere, die neben den Acrylsäureestern gegebenenfalls zur Herstellung der Pfropfgrundlage D'.2) dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage D'.2) sind Emulsionspolymerisate, die einen Gelgehalt von mindestens 60 Gew.% aufweisen.

Weitere geeignete Pfropfgrundlagen gemäß D'.2) sind Silikonkautschuke mit pfropfaktiven Stellen, wie sie z.B. in DE-A 3 704 657 beschrieben werden.

Die erfindungsgemäßen Zusammensetzungen können als **Komponente E)** weiterhin übliche Zusatzstoffe enthalten, die im Allgemeinen bis 15, vorzugsweise in einer Menge von 0,01 bis 10, besonders bevorzugt 0,05 bis 5, insbesondere bevorzugt 0,1 bis 3 Gew.-%, bezogen auf das Gesamtgewicht der Formmassen, zugesetzt werden können.

Alle üblichen Additive wie z.B. Stabilisatoren (zum Beispiel UV-Stabilisatoren, Thermostabilisatoren), Antistatika, Fließhilfsmittel, Entformungsmittel, Brandschutzadditive, Emulgatoren, Nukleierungsmittel, Weichmacher, Gleitmittel, pH-Wert emiedrigende Additive (z.B. Carboxylgruppen enthaltende Verbindungen), Additive zur Erhöhung der Leitfähigkeit, Farbstoffe und Pigmente kommen infrage. Die genannten und weitere geeignete Additive sind zum Beispiel beschrieben in Gächter, Müller, Kunststoff-Additive, 3. Ausgabe, Hanser-Verlag, München, Wien, 1989. Die Additive können alleine oder in Mischung bzw. in Form von Masterbatchen eingesetzt werden. Die Additive können zugemischt und/oder auf die Oberfläche aufgebracht werden.

Als Stabilisatoren können zum Beispiel sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als Nukleierungsmittel können z.B. Natriumphenylphosphinat, Aluminiumoxid, Siliziumdioxid sowie bevorzugt Talkum und die weiter vorne beschriebenen Nukleierungsmittel eingesetzt werden.

Als Gleit- und Entformungsmittel können Esterwachse, Penteritrytstearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Um leitfähige Formmassen zu erhalten, können Russe, Leitfähigkeitsrusse, Carbonfibrillen, nanoskalige Graphitfasem (Nanotubes), Graphit, leitfähige Polymere, Metallfasern sowie andere übliche Additive zur Erhöhung der Leitfähigkeit zugesetzt werden.

Als Flammschutzmittel können handelsübliche organische Halogenverbindungen mit Synergisten oder handelsübliche organische Stickstoffverbindungen oder organisch/anorganische. Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 122) können eingesetzt werden. Als halogenhaltige, insbesondere bromierte und chlorierte Verbindungen seien beispielhaft genannt: Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol. Als organische Phosphorverbindungen sind die Phosphorverbindungen gemäß WO-A 98/17720 (PCT/EP/05705) geeignet, z.B. Triphenylphosphat (TPP), Resorcinol-bis-(diphenylphosphat) einschließlich Oligomere sowie Bisphenol-A-bis-diphenylphosphat einschließlich Oligomere (vgl. z.B. EP-A 363 608 und EP-A 640 655), Melaminphosphat, Melaminpyrophosphat, Melaminpolyphosphat und deren Mischungen. Als Stickstoffverbindungen kommen insbesondere Melamin und Melamincyanurat infrage. Als Synergisten sind z.B. Antimonverbindungen, insbesondere Antimontrioxid und Antimonpentoxid, Zinkverbindungen, Zinnverbindungen wie z.B. Zinnstannat und Borate geeignet. Kohlenstoftbildner und und Tetrafluorethylenpolymerisate können zugesetzt werden. Die Flammschutzmittel, gegebenenfalls mit einem Synergisten, wie Antimonverbindungen, und Antidripping-Mittel werden im Allgemeinen bis zu einer Menge von 30, vorzugsweise 20 Gew.-% (bezogen auf die Gesamtzusammensetzung) eingesetzt.

Als Zusatzstoffe können auch Verstärkungsstoffe z.B. in Form von Glasfasern zugesetzt werden.

Als **Komponente F)** können die thermoplastischen Formmassen darüber hinaus einen Füllstoff oder Verstärkungsstoff oder eine Mischung aus zwei oder mehr unterschiedlichen Füllstoffen und/oder Verstärkungsstoffen beispielsweise enthalten auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasem. Bevorzugt werden mineralische teilchenfönnige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Insbesondere bevorzugt werden erfindungsgemäß mineralische teilchenförmige Füllstoffe auf der Basis von Talk, Wollastonit und/oder Glasfasern. Am meisten bevorzugt werden Füllstoffe auf Basis von Talk.

Insbesondere für Anwendungen, in denen Isotropie bei der Dimensionsstabilität und eine hohe thermische Dimensionsstabilität gefordert wird, wie beispielsweise in Kfz-Anwendungen für Karosserieaußenteile, werden bevorzugt mineralische Füllstoffe eingesetzt, besonders bevorzugt Talk, Wollastonit oder Kaolin.

Besonders bevorzugt sind auch nadelförmige mineralische Füllstoffe. Unter nadelförmigen mineralischen Füllstoffen wird erfindungsgemäß ein mineralischer Füllstoff mit stark ausgeprägtem nadelförmigen Charakter verstanden. Als Beispiel seien nadelförmigere Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, am meisten bevorzugt bei kleiner 5 µm, bestimmt mit einem CILAS GRANULOMETER.

Am meisten bevorzugt als Komponente D) werden mineralische Füllstoffe auf der Basis von Talk: Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, infrage.

Bevorzugt sind mineralische Füllstoffe, die einen Gehalt an Talk nach DIN 55920 von größer 50 Gew.-%, bevorzugt größer 80 Gew.-%, besonders bevorzugt größer 95 Gew.-% und insbesondere bevorzugt größer 98 Gew.-% bezogen auf die Gesamtmasse an Füllstoff aufweisen.

Die mineralischen Füllstoffe auf Basis von Talk können auch oberflächenbehandelt sein. Sie können beispielsweise mit einem Haftvermittlersystem z.B. auf Silanbasis ausgerüstet sein.

Die erfindungsgemäßen mineralischen Füllstoffe auf Basis von Talk haben bevorzugt eine obere Teilchen- bzw. Korngröße d97 kleiner 50 µm, bevorzugt kleiner 10, besonders bevorzugt kleiner 6 und insbesondere bevorzugt kleiner 2,5 µm. Als mittlere Korngröße d50 wird bevorzugt ein Wert kleiner 10, bevorzugt kleiner 6, besonders bevorzugt kleiner 2 und insbesondere bevorzugt kleiner 1 µm gewählt. Die d97- und d50-Werte von den Füllstoffen D werden nach Sedimentationsanalyse SEDIGRAPH D 5 000 bzw. nach Siebanalyse DIN 66 165 bestimmt.

Das mittlere Aspektverhältnis (Durchmesser zu Dicke) der teilchenförmigen Füllstoffe auf Basis von Talk liegt bevorzugt im Bereich 1 bis 100, besonders bevorzugt 2 bis 25 und insbesondere bevorzugt 5 bis 25, bestimmt an elektronenmikroskopischen Aufnahmen von Ultradünnschnitten der fertigen Produkte und Ausmessen einer repräsentativen Menge (ca. 50) von Füllstoffpartikeln.

Der Füllstoff und/oder Verstärkungsstoff kann gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Besonders bevorzugt sind erfindungsgemäß auch Glasfasern, die im Allgemeinen einen Faserdurchmesser zwischen 7 und 18, bevorzugt zwischen 9 und 15 µm haben, können als Endlosfasern oder als geschnittene oder gemahlene Glasfasern zugesetzt werden, wobei die Fasern mit einem geeigneten Schlichtesystem und einem Haftvermittler bzw. Haftvermittlersystem z.B. auf Silanbasis ausgerüstet sein können.

Gebräuchliche Silanverbindungen zur Vorbehandlung haben beispielsweise die allgemeine Formel

(X-(CH2)q)k-Si-(O-CrH2r+1)4-k

in der die Substituenten folgende Bedeutung haben:
- x: 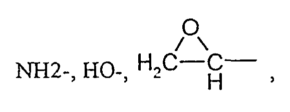
- q: eine ganze Zahl von 2 bis 10, bevorzugt 3 bis 4
- r: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,05 bis, vorzugsweise 0,5 bis 1,5 und insbesondere 0,8 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt auf.

Die Teilchendurchmesser am fertigen Produkt können dabei zum Beispiel dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden.

Die Herstellung der erfindungsgemäßen verwendeten Zusammensetzungen erfolgt nach an sich bekannten Verfahren durch Mischen der Komponenten. Es kann vorteilhaft sein, einzelne Komponenten vorzumischen. Vorzugsweise geschieht das Mischen der Komponenten A) bis D) sowie weiterer Bestandteile bei Temperaturen von 220 bis 330°C durch gemeinsames Kneten, Extrudieren oder Verwalzen der Komponenten.

Die erfindungsgemäßen verwendeten Zusammensetzungen können nach üblichen Verfahren zu Halbzeugen oder Formteilen aller Art verarbeitet werden. Als Beispiele für Verarbeitungsverfahren seien Extrusionsverfahren und Spritzgussverfahren genannt. Als Beispiele für Halbzeuge seien genannt Folien und Platten.

Erfindungsgemäß werden die Formteile im Anschluss an ihre Herstellung mit mindestens einem wässrigen Lack lackiert, wobei beim Einsatz von mehrschichtigen Lacksystemen, bei denen die einzelnen Lackschichten durch die Verwendung von lösemittelhaltigen oder wässrigen Lacken hergestellt werden können, erfindungsgemäß mindestens die Lackschicht, die direkt auf das Substrat aufgetragen wird, wässrig ist.

Wässrige Lacksysteme können durchaus bis zu 30 % organischen Co-Löseranteil enthalten. Heutiger Stand der Technik sind Systeme mit einem organischen Co-Löseranteil von 10-5 %. Im Idealfall haben wässrige Lacksysteme keinen Co-Löser.

Co-Löser sind die in der Lackindustrie eingesetzten Lacklösemittel. Sie werden u.a. zum Dispergieren und auch als Koaleszenzhilfsmittel benötigt.

Wässrige Lacksysteme können 1K-Systeme sein, z.B. physikalisch trocknend Systeme oder Systeme mit blockierten Härtern die bei erhöhten Temperaturen deblockiet werden und anschließend durch eine chemische Reaktion vernetzen., oder 2K. 2K-Systeme härten durch eine chemische Reaktion, wobei ein Reaktionspartner bereits bei Lagerbedingung reagieren würde. Daher werden die Komponenten erst kurz vor der Applikation miteinander vermischt. 2K-Systeme haben den Nachteil der aufwendigeren Anlagentechnik und der zeitlich beschränkten Verarbeitbarkeit nach Vermischung. Vorteil der 2K-Systeme ist die bessere Qualität der resultierenden Beschichtung.

Besonders erwähnt seien hier die wässrigen 2K PUR-Lacke, die als Vernetzungsmechanismus die Reaktion von Isocyanat-Gruppen mit OH-Gruppen aufweisen.

Um ein optimales Lackierergebnis zu erhalten, muss das Substrat sauber sein. Dies wird im industriellen Maßstab häufig durch den Einsatz einer "Power-Wash-Anlage" gewährleistet. Es gibt hier aber durchaus auch die Möglichkeit, mit Hilfe von Lösemitteln die Oberfläche zu reinigen.

Sollte die Oberflächenpolarität nach der Reinigung nicht ausreichen, so kann die Oberfläche u.a. durch
- Beflämmung
- Fluorierung
- Plasmabehandlung
oder Coronabehandlung aktiviert werden.

Des weiteren besteht die Möglichkeit, eine Lackhaftung durch den Einsatz eines Haftprimers herzustellen.

Elektrisch leitfähige Oberfläche kann man durch den Einsatz von sogernannten Leitprimem generieren.

Bevorzugt werden die Formteile ohne Vorbehandlung nach der Reinigung direkt mit einem wässrigen Lack lackiert. In einer ganz besonders bevorzugten Form handelt es sich bei dem wässrigen Lack um einen farbgebenden Hydrobasislack. Bevorzugt kann dieser Hydrobasislack mit einer Schicht eines lösemittelhaltigen, wässrigen oder lösemittelfreien Klarlacks überzogen werden.

Besonders bevorzugt werden die erfindungsgemäß verwendeten Formmassen zu Formteilen im Innen- und Außenbereich, bevorzugt im Kfz-Außenbereich wie beispielsweise Stoßfängern, Kotflügel, Türen oder Türenteile, Tankdeckel, Motorhauben, Blenden und Heckblenden, Lufteinlassgitter, Spoiler, Ladeflächen, Abdeckungen für Ladeflächen, Dächer oder Dachteile verarbeitet und mit mindestens einem Hydrolack lackiert. Die Formteile können klein- oder großteilig sein.

Formteile bzw. Halbzeuge aus den erfindungsgemäß verwendeten Formmassen/Zusammensetzungen können sich auch im Verbund mit weiteren Werkstoffen wie z.B. Metall oder Kunststoff befinden. Die erfindungsgemäßen Formmassen bzw. die Formteile/Halbzeuge aus den erfindungsgemäßen verwendeten Formmassen können durch übliche Techniken des Verbinden und Zusammenfügen mehrerer Komponenten oder Teile wie z.B. Coextrusion, Folienhinterspritzen, Umspritzen von Einlegeteilen, Kleben, Verschweißen, Verschrauben oder Klammern im Verbund mit anderen Werkststoffen oder sich selbst für die Herstellung von Fertigteilen wie z.B. Karosserieaußenteilen eingesetzt werden.

Die erfindungsgemäßen Formteile können auch für zahlreiche weitere mit Hydrolacken lackierten Anwendungen verwendet werden. Beispielsweise seien genannt die Verwendung in der Elektro- und Elektroniktechnik, sowie im Bausektor. In den genannten Einsatzgebieten können Formteile aus den erfindungsgemäßen Formmassen zum Beispiel als Lampenabdeckungen, als Sicherheitsscheiben, als Gehäusematerial für elektronische Geräte, als Gehäusematerial für Haushaltsgeräte, als Platten zur Herstellung von Abdeckungen verwendet werden.

Die erfindungsgemäßen lackierten Formteile auf Basis der erfindungsgemäßen Formmassen zeichnen sich durch ausgezeichnete Lackhaftung aus. Die Lackhaftung kann beispielsweise durch Gitterschnitt-Test, Tape-Test und/oder bevorzugt den Dampfstrahltest nach DaimlerChrysler Norm DBL 5431. Die Lackhaftung bei den erfindungsgemäßen Formmassen ist dabei insbesondere besonders in den Bereichen, bei denen Scherreibung beim Entformen des Formteils auftritt, sehr kritisch. Darüber hinaus erfüllen die erfindungsgemäßen Formmassen hohe Anforderungen hinsichtlich Verarbeitungsstabilität, Fließfähigkeit der Schmelze, Zähigkeit, Tieftemperaturzähigkeit, Steifigkeit, Wärmeformbeständigkeit, thermische Ausdehnung, Oberflächenqualität, Lackierbarkeit, Chemikalienbeständigkeit und Kraftstoffbeständigkeit.

### Beispiele

### Komponente A)

Lineares Polybutylenterephthalat (Pocan B 1500, Handelsprodukt der Bayer AG, Leverkusen, Deutschland) mit einer Intrinsischen Viskosität von ca. 1,25 cm³/g (gemessen in Phenol: 1,2-Dichlorbenzol = 1:1 bei 25°C)

### Komponente B)

Polyethylenterephthalat: Es handelt sich um Polyethylenterephthalat mit einer intrinsischen Viskosität IV von 0,74 cm³/g und einer isothermen Kristallisationszeit bei 215°C von ca. 4,2 Minuten.

Die intrinsische Viskosität wird gemessen in Phenol/o-Dichlorbenzol (1:1 Gew.-Teile) bei 25°C.

Die Bestimmung der isothermen Kristallisationszeit von PET mit der DSC-Methode (differential scanning calometry) erfolgt mit einem PERKIN ELMER DSC 7 Differential Scanning Galometer (Einwaage ca. 10 mg, gelochtes Al-Pfännchen) mit folgendem Temperaturprogramm:
1. Aufheizen von 30°C bis 290°C mit 40°C/min,
2. 5 min. isotherm bei 290°C,
3. Kühlen von 290°C auf 215°C mit 160°C/min,
4. 30 min isotherm bei 215°C (kristallisationstemperatur).

Die Auswertungssoftware ist PE Thermal Analysis 4.00.

### Komponente C)

Lineares Polycarbonat (Makrolon 2805 von Bayer AG, Leverkusen, Deutschland) auf Basis Bisphenol A mit einer Viskosität ηrel. von ca. 1,29 (Meßbedingungen: 5 g Polycarbonat pro Liter Methylenchlorid, 25°C) und einem Molekulargewicht Mw von ca. 29 000 g/mol (bestimmt mit GPC-Methoden gegen Polycarbonatstandard).

### Komponente D)

ABS-Propfcopolymerisat (Typ P7528B4, Versuchsprodukt der Bayer AG, Leverkusen) mit einer Partikelgröße von 280 bis 400 nm.

### Komponente E)

Als Additive der Komponente E) wurde eine Mischung üblicher Stabilisatoren, Nukleierungsmittel und Entformungsmittel verwendet.

Compoundierungen erfolgten auf einem Zweiwellenextruder des Typs ZSK32 (Wemer und Pfleiderer) bei Massetemperaturen von 250 bis 290°C.

Die Prüfkörper wurden auf einer Spritzgießmaschine des Typs Arburg 320-210-500 bei Massetemperaturen von 260 bis 280°C und Werkzeugtemperaturen von 70 bis 90°C verspritzt.

Die Ausprüfungen der erfindungsgemäßen Formmassen erfolgte nach folgenden Methoden:
Vicat B: Wärmeformstabilität bzw. Wärmeformbeständigkeit nach DIN ISO 306/B 120 in Silikonöl.
Izod-Schlagzähigkeit: Zähigkeit nach ISO 180 Methode 1 U bei -50°C.
Izod-Kerbschlagzähigkeit: Zähigkeit nach ISO 180 Methode 1 A bei -20°C
Zugmodul: Steifigkeit nach DIN / EN / ISO 527-2/1A.
Reißdehnung: Dehnbarkeit bestimmt nach DIN/EN/ISO 527-2/1A.
Schmelzeviskosität: Bestimmt nach DIN 54811 / ISO 11443 bei 280°C und einer Scherrate von 1000s⁻¹ mit dem Gerät Viscorobo 94.00 der Fa. Göttfert nach Trocknung des Granulates bei 120°C für 4 Stunden im Vakuumtrockner.

Die Prüfung der Lackhaftung erfolgt durch den Dampfstrahltest nach DaimlerChrysler Norm 5431.

Für die Lackhaftung werden sogenannte Reibungskoeffizientenplatten mit einer Massetemperatur von 280°C und einer Werkzeugtemperatur von 60°C aus den erfindungsgemäßen Formmassen hergestellt, bei denen eine Scherreibung während des Entformungsprozess appliziert wird. Bei den Reibungskoeffizientenplatten handelt es sich um Rundplatten entsprechend nachfolgender Skizze. Nach dem Füllen des Werkzeugs wird der Stempel bei einem Stempeldruck von 50 N/cm² im Randbereich des Kreises über einen Zeitraum von 15 s um 37° gedreht. Anschließend wird der Stempel von der Oberfläche entfernt. Das Reibungskoeffizientenwerkzeug, das zum Herstellen von Reibungskoeffizientenplatten eingesetzt wird, ist beispielsweise in PCT 02/03211 beschrieben.

Nach dem Spritzguss wurden die Platten etwa 1 Woche bei Raumtemperatur gelagert, dann 30 min bei 80°C temperiert und anschließend mit dem Hydrobasislack des Typs 101894 (Farbe Obsedianschwarz, der Fa. Wörwag, Stuttgart) lackiert. Anschließend werden die Platten etwa 5 min bei Raumtemperatur und dann etwa 30 min bei etwa 70°C getrocknet. Die Trockenfilmdicke beträgt etwa 8 bis 12 µm. Dann werden die Platten mit einem lösemittelhaltigen Klarlack des Typs 68945 (Fa. Wörwag, Stuttgart) lackiert, etwa 7 min bei Raumtemperatur und dann etwa 40 min bei 80°C getrocknet. Die Trockenfilmdicke beträgt etwa 30 µm.

Die lackierten Platten werden etwa 1 Woche bei Raumtemperatur gelagert. Anschließend wurde an vier Stellen im Ring (nachfolgende Skizze), in dem die Scherreibung beim Entformen der Formteils appliziert wurde, ein Kreuzschnitt und der Dampfstrahltest nach DBL-Norm 5431 durchgeführt. Insgesamt wurden pro Test 12 Prüfungen an 4 Platten einer Partie durchgeführt.

Die Beurteilung der Lackhaftung erflogt in Anlehnung an DBL 5431:
0 = kein Ausfall, in Ordnung
1 = Ablösen bis 2 mm², in Ordnung
2 = Ablösen 0,5 mm pro Seite, in Ordnung
3 = Abplatzungen flächenmäßig bis 40 mm², nicht in Ordnung
4 = Großflächige Abplatzungen flächenmäßig bis 250 mm², nicht in Ordnung
5 = Großflächige Abplatzungen in Strahlgröße > 250 mm², nicht in Ordnung

Wie aus Tabelle 1 ersichtlich zeigen erfindungsgemäße Formmassen, die sowohl Komponente A, wie beispielsweise Polybutylenterephthalat, als auch Komponente B, wie beispielsweise Polyethylenterephthalat, enthalten (Bsp. 1, 2 und 3) eine geringere Ausfallquote und eine bessere Bewertung im Dampfstrahltest nach DBL 5431 und damit eine bessere Lackhaftung der Hydrolacke als die Vergleichsbeispiele, in denen nur Komponente A oder Komponente B eingesetzt wurde.

Die mechanischen Eigenschaften, die Wärmeformbeständigkeit und die Viskosität bleiben dabei nahezu unbeeinflusst und erfüllen in jedem Fall die Anforderungen für die Formmassen.

Zusammensetzung und Eigenschaften der erfindungsgemäßen thermoplastischen Formmassen gehen aus Tabelle 1 hervor.

**Tabelle 1**

| | 476 | **b** | **c** | **d** | **e** | **f** |
|---|---|---|---|---|---|---|
| **Beispiele** | | **Vgl. 1** | **Bsp. 1** | **Bsp. 2** | **Bsp. 3** | **Vgl.2** |
| Komponente A, Polybutylenterephthalat | [%] | 41,8 | 26,8 | 21,8 | 11,8 | -- . |
| Komponente B, Polyethylenterephthalat | [%] | -- | 15,0 | 20,0 | 30,0 | 41,8 |
| Komponente C, Polycarbonat Polycarbonat | [%] | 45,0 | 45,0 | 45,0 | 45,0 | 45,0 |
| Komponente D, ABS-Kautschuk | [%] | 12,0 | 12,0 | 12,0 | 12,0 | 12,0 |
| Additive | [%] | 1,2 | 1,2 | 1,2 | 1,2 | 1,2 |
| Vicat B | [°C] | 129 | 131 | 130 | 130 | 138 |
| Izod-Schlagzähigkeit -50°C | [kJ/m²] | n.g. | n.g. | n.g. | n.g. | n.g. |
| Izod-Kerbschlagzähigkeit -20°C | [kJ/m²] | 52 | 51 | 49 | 47 | 31 |
| Zugmodul | [MPa] | 2095 | 2130 | 2106 | 2108 | 2131 |
| Reißdehnung | [%] | 144 | 142 | 150 | 124 | 129 |
| Schmelzeviskosität (280°C/1000s⁻¹) | [Pas] | 384 | 375 | 382 | 380 | 245 |
| Einzelbewertung im HDW-Test | | 9x"0" | 11x"0" | 12x"0" | 12x"0" | 6x"0" |
| | | 2x"4,5" | 1x"5" | | | 3x"0,5" |
| | | 1x"5" | | | | 1x"2" 1x"2,5" 1x"4" |
| Ausfallquote im HDW-Test | [%] | 25 | 8 | 0 | 0 | 25 |

| | | | | | | |
|---|---|---|---|---|---|---|
| n.g. = nicht gebrochen | | | | | | |

## Patentansprüche

1. Verwendung von Zusammensetzungen, enthaltend
A) 4 bis 80, Gew.-Teile, mindestens eines Polyalkylenterephthalats,
B) 4 bis 80, Gew.-Teile, mindestens eines Polyalkylenterephthalats mit einer von Komponente A) unterschiedlichen Alkylenkettenlänge,
C) 10 bis 90, mindestens eines aromatischen Polycarbonats,
D) 1 bis 30, Gew.-Teile, mindestens eines kautschukelastischen Polymerisats oder Pfropfcopolymerisats,
E) 0,1 bis 20 Gew.-Teile, Gew.-Teile üblicher Additive und Verarbeitungshilfsmittel,
die zusammen 100 Gew.-Teile ergeben, gegebenenfalls zusätzlich enthaltend
F) 0 bis 60, Gew.-Teile, mindestens eines teilchenförmigen mineralischen Füllstoffs,
zur Herstellung von lackierten Formteilen, wobei aus A) - F) Formkörper hergestellt werden und diese mit Hydrolacken lackiert werden, wobei bei mehrschichtigen Lacksystemen mit verschiedenen Lösemitteln mindestens das Lösemittel der ersten, untersten Lackschicht auf Wasserbasis bestehen muss.

2. Verwendung gemäß Anspruch 1, wobei die Formteile vor der Lackierung gereinigt und/oder vorbehandelt werden.

3. Formteile und/oder Halbzeuge hergestellt gemäß Anspruch 1 und/oder Anspruch 2.

4. Verwendung der Formteile gemäß Anspruch 3 in der Elektro- und Elektroniktechnik und im Bausektor.

5. Verwendung der Formteile gemäß Anspruch 3 als Außenteile von Kraftfahrzeugen.

## Claims

1. Use of compositions comprising
A) from 4 to 80 parts by weight of at least one polyalkylene terephthalate,
B) from 4 to 80 parts by weight of at least one polyalkylene terephthalate having an alkylene chain length different from component A),
C) from 10 to 90 parts by weight of at least one aromatic polycarbonate,
D) from 1 to 30 parts by weight of at least one elastomeric polymer or graft copolymer,
E) from 0.1 to 20 parts by weight of conventional additives and processing aids,
which together give 100 parts by weight, optionally additionally comprising
F) from 0 to 60 parts by weight of at least one particulate mineral filler,
in the production of lacquered mouldings, wherein moulded bodies are produced from A) - F) and are lacquered with hydro lacquers, wherein in the case of multi-layer lacquer systems having different solvents, at least the solvent of the first, lowermost lacquer layer must be water-based.

2. Use according to claim 1, wherein the mouldings are cleaned and/or pretreated prior to lacquering.

3. Mouldings and/or semi-finished products produced according to claim 1 and/or claim 2.

4. Use of the mouldings according to claim 3 in electronics and electrical engineering and in the construction sector.

5. Use of the mouldings according to claim 3 as external parts of motor vehicles.

## Revendications

1. Utilisation de compositions contenant
A) 4 à 80 parties en poids d'au moins un polyalkylène téréphtalate,
B) 4 à 80 parties en poids d'au moins un polyalkylène téréphtalate présentant une longueur de chaîne différente du composant A),
C) 10 à 90 parties en poids d'au moins un polycarbonate aromatique,
D) 1 à 30 parties en poids, d'au moins un polymère caoutchouc-élastique ou d'un copolymère greffé,
E) 0,1 à 20 parties en poids d'additifs et d'adjuvants de transformation usuels,
qui font ensemble 100 parties en poids, contenant le cas échéant en plus
F) 0 à 60 parties en poids d'au moins une charge minérale particulaire,
pour produire des pièces moulées vernies, des pièces moulées étant fabriquées à partir de A) - F) et celles-ci étant vernies avec des vernis à base hydraulique, auquel cas pour des systèmes de vernis multicouches avec différents solvants, au moins le solvant de la première couche inférieure de vernis devant être à base d'eau.

2. Utilisation selon la revendication 1, **caractérisée en ce que** les pièces moulées sont nettoyées et/ou prétraitées avant le vernissage.

3. Pièces moulées et/ou semi-finis fabriqués conformément à la revendication 1 et/ou la revendication 2.

4. Utilisation des pièces moulées conformément à la revendication 3 en électrotechnique et en technique électronique, ainsi que dans le secteur du bâtiment.

5. Utilisation des pièces moulées conformément à la revendication 3 comme éléments extérieurs de véhicules.
